Europäisches Patentamt

European Patent Office

Office européen des brevets

(19)

(11) Veröffentlichungsnummer : **0 093 703**
**B1**

(12) **EUROPÄISCHE PATENTSCHRIFT**

(45) Veröffentlichungstag der Patentschrift :
· 15.04.87

(21) Anmeldenummer : 83890060.3

(22) Anmeldetag : 25.04.83

(51) Int. Cl.⁴ : **B 01 F   3/04**, B 01 F   5/02,
**C 02 F   3/12**

(54) **Verfahren zur Regelung des Luft- bzw. Sauerstoffeintrages in einer Mischstrahlbelüftungsanlage.**

(30) Priorität : 04.05.82 AT 1738/82

(43) Veröffentlichungstag der Anmeldung :
09.11.83 Patentblatt 83/45

(45) Bekanntmachung des Hinweises auf die Patenterteilung : 15.04.87 Patentblatt 87/16

(84) Benannte Vertragsstaaten :
DE FR IT

(56) Entgegenhaltungen :
FR-A- 2 326 384
JOURNAL OF THE WATER POLLUTION CONTROL
FEDERATION, Band 41, Nr. 10, Oktober 1969, Seiten
1726-1736; R.W. WEST et al.: "Jet aeration in activated sludge systems"

(73) Patentinhaber : **VOEST-ALPINE Aktiengesellschaft**
**Friedrichstrasse 4**
**A-1011 Wien (AT)**

(72) Erfinder : **Schweizer, Michel, Dipl.-Ing.**
**Gössgraben 16**
**A-8793 Trofaiach (AT)**
Erfinder : **Vermes, Johann, Dipl.-Ing**
**Prechtlerstrasse 77**
**A-4020 Linz (AT)**

(74) Vertreter : **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf ein Verfahren zur Regelung des Luft- bzw. Sauerstoffeintrages in einer Mischstrahlbelüftungsanlage, bei welcher die eingebrachte Luft bzw. der Sauerstoff in einer Weise eingedüst wird, daß der Gasstrahl zumindest teilweise vom Flüssigkeitsstrahl ummantelt wird. Derartige Mischstrahlbelüftungsanlagen werden als Belüftungssysteme für biologische Stufen von Abwasserreinigungsanlagen eingesetzt. Bei Mischstrahlbelüftungen wird Wasser ebenso wie Luft unter Druck unterhalb der Oberfläche des Abwasserbeckens eingeblasen und es werden Strahldüsen mit unterschiedlicher Düsengeometrie eingesetzt. Bei den bekannten Strahldüsen für die Mischstrahlbelüftung ist es möglich, unterschiedliche Mengen von Luft bzw. Wasser einzudüsen. Wenn aus technischen Gründen zur Regelung des Sauerstoffeintrages die Luftmenge variiert wird, hat es sich jedoch gezeigt, daß die erforderliche Belüfterantriebsleistung, das heißt die Pumpenleistung für das Einbringen des Wassers und die Belüfterleistung für das Einblasen von Luft, relativ großen Schwankungen unterliegt, um den gleichen Sauerstoffeintrag zu erzielen. Um den gleichen Sauerstoffeintrag zu erzielen, kann prinzipiell sowohl die Luftmenge als auch die Wassermenge variiert werden, wobei sich bei Verringerung der Wassermenge und Erhöhung der Luftmenge ebenso wie bei Verringerung der Luftmenge und Erhöhung der Wassermenge ein gleicher Sauerstoffeintrag in gewissen Grenzen erzielen läßt.

Aus « Journal of the Water Pollution Control Federation » Bd. 41, Nr. 10 (Oktober 1969), Seiten 1726 bis 1736, ist für Belüftungseinrichtungen zu entnehmen, daß eine Erhöhung der Luftdurchflußrate eine Erhöhung des Energieverbrauchs zur Folge hat. Weiters wurde festgestellt, daß bei konstanter Luftmenge je Zeiteinheit durch Änderung der Wassermenge in der Zwischenzeit der Wirkungsgrad verbessert werden kann.

Die Erfindung zielt nun darauf ab, die erforderliche Gesamtantriebsleistung für Pumpe und Belüfter über einen großen Regelbereich des Sauerstoffeintrages so gering wie möglich zu halten. Die Erfindung geht hiebei von der Verwendung von Düsen aus, bei welchen der Gasstrahl zumindest teilweise vom Flüssigkeitsstrahl ummantelt wird. Zur Lösung der erfindungsgemäßen Aufgabe besteht das eingangs genannte Verfahren im wesentlichen darin, daß die den Düsen zugeführte Betriebswassermenge auf einem vorbestimmten Wert konstant gehalten wird und lediglich die Gasmenge verändert wird, wobei die Betriebswassermenge aus den für eine bestimmte Düsengeometrie ermittelten Abhängigkeiten der Luft- bzw. Sauerstoffmenge je Düse von der Wassermenge je Düse bei konstantem Sauerstoffeintrag und bei konstanter mechanischer Gesamtantriebsleistung für die Zuführung der Flüssigkeit und der Luft bzw. des Sauerstoffes zu den Düsen ermittelt wird, und der vorbestimmte Wert für die Betriebswassermenge, auf welchem diese konstant gehalten wird, dem Abszissenwert innerhalb eines Bereiches entspricht, in welchem die erste Ableitung des geometrischen Ortes der Berührungspunkte der Kurven der Abhängigkeiten der Luft- bzw. Sauerstoffmenge je Düse von der Wassermenge je Düse bei konstantem Sauerstoffeintrag und bei konstanter mechanischer Gesamtantriebsleistung einen vorbestimmten Mindestbetrag übersteigt, insbesondere ihren größten Betrag annimmt. Bei den eingangs genannten Düsen, bei welchen der Gasstrahl zumindest teilweise vom Flüssigkeitsstrahl ummantelt wird, hat sich überraschenderweise gezeigt, daß es möglich ist, eine bestimmte, von der Düsengeometrie abhängige Wassermenge als Betriebswassermenge konstant zu halten, wobei zur Veränderung der Luftmenge zum Zwecke der Veränderung des Sauerstoffeintrages über einen weiten Regelbereich jeweils die geringste mögliche Gesamtantriebsleistung aufgewendet werden muß. Bei Düsen, bei welchen der Gasstrahl nicht zumindest teilweise vom Flüssigkeitsstrahl ummantelt wird, konnte keine derartige günstige Betriebswassermenge aufgefunden werden, welche die günstigsten Werte für die erforderliche Gesamtantriebsleistung ergeben könnte. Die Auffindung einer definierten Betriebswassermenge für die eingangs genannten Düsen, welche über einen weiten Regelbereich des Sauerstoffeintrags den jeweils günstigsten Energieverbrauch liefert, ist daher überraschend.

Die Bestimmung der für die Erzielung des geringsten Energieverbrauches günstigsten Betriebswassermenge erfolgt erfindungsgemäß aus den für jede Düsengeometrie bestimmbaren Abhängigkeiten der Luft- bzw. der Sauerstoffmenge je Düse von der Wassermenge je Düse bei konstantem Sauerstoffeintrag sowie der Abhängigkeit der Luft- bzw. der Sauerstoffmenge je Düse von der Wassermenge je Düse bei konstanter mechanischer Gesamtantriebsleistung. Unter Gesamtantriebsleistung wird hiebei immer die Pumpenantriebsleistung für das Einbringen der Wassermenge und die Belüfterleistung für das Einbringen von Luft verstanden.

Das Kriterium für den Wirkungsgrad eines Belüftungssystems wird durch den Sauerstoffertrag gekennzeichnet. Unter Sauerstoffertrag wird der Sauerstoffeintrag in Kilogramm Sauerstoff pro Stunde im Verhältnis zur aufzuwendenden mechanischen Energie in Kilowattstunden verstanden. Wesentlich für das erfindungsgemäße Verfahren ist hiebei die Verwendung von Düsen, welche eine Mischstrahlbildung erlauben. Für derartige Düsen ist es charakteristisch, daß die zur Zerteilung des Luftstromes in Luftblasen notwendige Energie vorwiegend durch die kinetische Energie des Wasserstrahles eingebracht wird. Beim Austritt aus dem Mischrohr hat bei derartigen Düsen der vom Wasserstrahl eingehüllte Luftstrom aufgrund des Auftriebes die Tendenz, den Wasserstrahl zu durchsetzen und wird im Scherfeld des Wasserstrahles in feinste Blasen zerteilt. Das erfindungsgemäße Verfahren läßt sich mit Erfolg nur für derartige Düsen anwenden.

Erfindungsgemäß wird die Betriebswassermenge auf einem Wert konstant gehalten, welcher dem Abszissenwert innerhalb eines Bereiches entspricht, in welchem die erste Ableitung des geometrischen Ortes der Berührungspunkte der Kurven der Abhängigkeiten der Luft- bzw. Sauerstoffmenge je Düse von der Wassermenge je Düse bei konstantem Sauerstoffeintrag und bei konstanter mechanischer Gesamtantriebsleistung einen vorbestimmten Mindestbetrag übersteigt, insbesondere ihren größten Betrag annimmt. Die erste Ableitung des geometrischen Ortes der genannten Berührungspunkte gibt hiebei die Steigung dieser Kurve an und im Bereich der größten Steigung dieser Kurve läßt sich der größte Regelbereich des Sauerstoffeintrages durch ausschließliche Veränderung der Luftmenge bei gleichzeitig geringster Gesamtantriebsleistung verwirklichen.

Als für die Durchführung dieses Verfahrens geeignete Düsen kommen in erster Linie Manteldüsen in Frage, bei welchen die Luft über ein zentrales Rohr und das Wasser über ein dieses zentrale Rohr am Austrittsende der Düse konzentrisch umgebendes Rohr eingebracht werden.

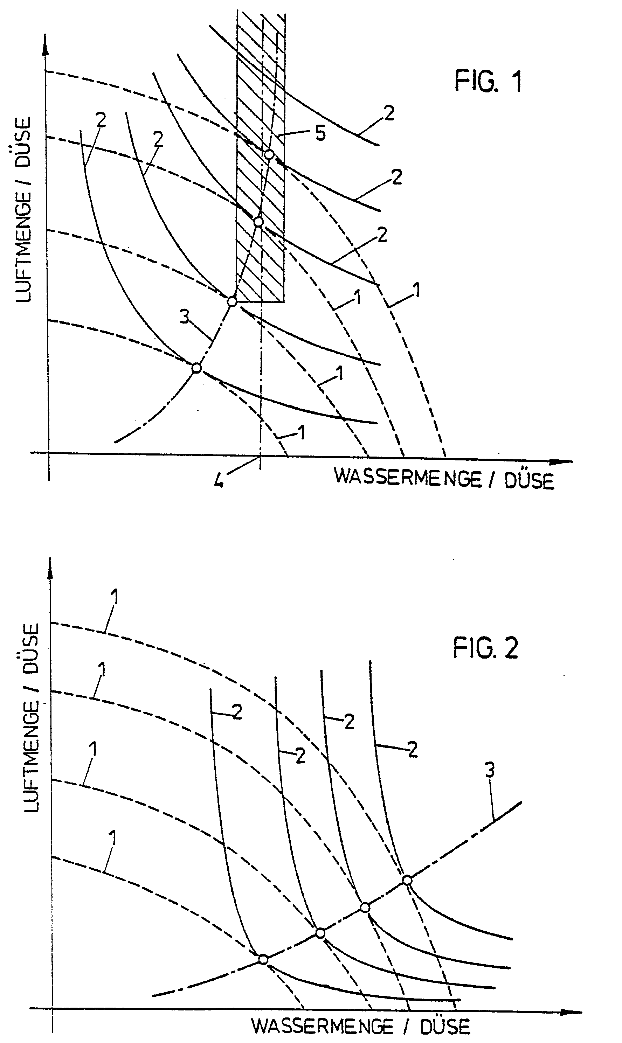

Die Erfindung wird nachfolgend anhand der Zeichnungen näher erläutert. In dieser zeigen Fig. 1 die Verhältnisse bei Verwendung von Mischstrahldüsen, bei welchen der Luftstrahl zumindest teilweise vom Wasserstrahl ummantelt ist, und Fig. 2 die Verhältnisse, wie sie für konventionelle Mischdüsenanordnungen gelten.

In Fig. 1 ist auf der Abszisse die Wassermenge je Düse und auf der Ordinate die Luftmenge je Düse aufgetragen. Die Kurven 1 bezeichnen hiebei die Abhängigkeit der je Düse einblasbaren Luft- bzw. Wassermenge bei jeweils konstanter mechanischer Gesamtantriebsleistung. Die Kurven 2 bezeichnen die Abhängigkeit der Luftmenge für die Düse von der Wassermenge je Düse bei konstantem Sauerstoffeintrag. Aus diesen Kurven ist ersichtlich, daß bei gleicher mechanischer Gesamtantriebsleistung jeweils eine größere Wassermenge auf Kosten der einblasbaren Luftmenge oder eine größere Luftmenge auf Kosten der Wassermenge eingeblasen werden kann. Die Kurven 2 verdeutlichen, daß bei konstantem Sauerstoffeintrag jeweils über einen bestimmten Bereich entweder mehr Luft oder mehr Wasser eingebracht werden kann. Die Berührungspunkte dieser Kurven stellen diejenigen Punkte dar, bei welchen der maximale Wirkungsgrad erreicht wird und somit der Sauerstoffertrag am größten ist. Der geometrische Ort der Berührungspunkte der genannten Kurven 1 und 2 ist mit 3 bezeichnet. Da in der Fig. 1 auf der Abszisse die Wassermenge je Düse aufgetragen ist, ergibt sich als günstigste Betriebswassermenge der mit 4 bezeichnete Abszissenwert, welcher innerhalb des schraffierten Bereiches 5 liegt. Der schraffierte Bereich 5 stellt den Bereich der größten Steigung der Kurve 3 dar, bei welchem die erste Ableitung dieser Kurve 3 somit einen vorbestimmten Betrag übersteigt und im besonderen nahe ihrem höchsten Betrag liegt.

Aus dem Diagramm in Fig. 1 ist bei der auf diese Weise ermittelten optimalen Betriebswassermenge unmittelbar ersichtlich, daß eine Veränderung der Luftmenge je Düse einen weiten Regelbereich des Sauerstoffeintrages gestattet, ohne daß hiebei der Bereich des günstigsten Sauerstoffertrages und damit des höchsten Wirkungsgrades verlassen wird.

In Fig. 2 ist wiederum auf der Abszisse die Wassermenge je Düse und auf der Ordinate die Luftmenge je Düse dargestellt. Bei den in dieser Figur dargestellten Kurven 1 und 2 handelt es sich wiederum um die Kurven bei konstanter mechanischer Gesamtantriebsleistung und bei konstantem Sauerstoffeintrag. Bei der Darstellung nach Fig. 2 handelt es sich jedoch um eine konventionelle Düsenanordnung, bei welcher kein Mischstrahl erzielt wird, bei welchem der Luftstrahl zumindest teilweise vom Wasserstrahl ummantelt ist. Auch bei dieser normalen Düsenanordnung ist es möglich, den geometrischen Ort der Berührungspunkte der genannten Kurven 1 und 2 zu bilden und diese Kurve ist wiederum mit 3 bezeichnet. Aus dem Verlauf dieser Kurve 3 ist unmittelbar ersichtlich, daß bei der konventionellen Düsenanordnung keine günstigste Betriebswassermenge abgeleitet werden kann, welche bei Variation der Luftmenge je Düse eine Änderung des Sauerstoffeintrages bei weitgehend gleichbleibendem Sauerstoffertrag bzw. Wirkungsgrad ermöglicht.

**Patentanspruch**

Verfahren zur Regelung des Luft- bzw. Sauerstoffeintrages in einer Mischstrahlbelüftungsanlage, bei welcher die eingebrachte Luft bzw. der Sauerstoff in einer Weise eingedüst wird, daß der Gasstrahl zumindest teilweise vom Flüssigkeitsstrahl ummantelt wird, dadurch gekennzeichnet, daß die den Düsen zugeführte Betriebswassermenge auf einem vorbestimmten Wert (4) konstant gehalten wird und lediglich die Gasmenge verändert wird, wobei die Betriebswassermenge aus den für eine bestimmte Düsengeometrie ermittelten Abhängigkeiten (1, 2) der Luft- bzw. Sauerstoffmenge je Düse von der Wassermenge je Düse bei konstantem Sauerstoffeintrag und bei konstanter mechanischer Gesamtantriebsleistung für die Zuführung der Flüssigkeit und der Luft bzw. des Sauerstoffes zu den Düsen ermittelt wird und der vorbestimmte Wert für die Betriebswassermenge, auf welchem diese konstant gehalten wird, dem Abszissenwert (4) innerhalb eines Bereiches entspricht, in welchem die erste Ableitung des geometrischen Ortes der Berührungspunkte der Kurven (1, 2) der Abhängigkeiten der Luft- bzw. Sauerstoffmenge je Düse von der Wassermenge je Düse bei konstantem Sauerstoffeintrag und bei konstanter mechanischer Gesamtantriebsleistung einen vorbestimmten Mindestbetrag übersteigt, insbesondere ihren größten Betrag annimmt.

## Claim

Process for the control of an air or oxygen feed in a jet mixing aeration plant in which the introduced air or oxygen is ejected in a manner such that the gas jet is at least partially shrouded by the liquid jet, characterised in that the amount of process water supplied to the nozzles is kept constant at a predetermined value (4) and only the amount of gas is varied, the amount of process water being determined in accordance with dependencies (1, 2) of the amount of air or oxygen per nozzle from the amount of water per nozzle for a certain nozzle geometry at constant oxygen supply and at constant total mechanical drive power for supplying liquid and air or oxygen to the nozzles, and the predetermined value for the amount of process water, at which value the amount is being fixed, corresponding to the abscissa value (4) within a range in which the first derivative of the locus of osculation points of the curves (1, 2) of the dependencies of the amount of air or oxygen per nozzle from the amount of water per nozzle at constant oxygen supply and at constant total mechanical drive power exceeds a predetermined minimum value, and in particular assumes its maximum value.

## Revendication

Procédé pour régler l'alimentation en air ou en oxygène dans une installation d'aération à jets mixtes, dans laquelle l'air ou l'oxygène introduit est injecté au moyen de buses de telle sorte que le jet de gaz est enveloppé au moins partiellement par un jet de liquide, caractérisé en ce que l'on maintient constante la quantité d'eau de service envoyée aux buses à une valeur prédéterminée (4) et qu'on modifie uniquement la quantité de gaz, auquel cas la quantité d'eau de service est déterminée à partir des dépendances (1, 2), calculées pour une géométrie déterminée des buses, de la quantité d'air ou d'oxygène pour chaque buse vis-à-vis de la quantité d'eau pour chaque buse pour une alimentation constante en oxygène et pour une puissance mécanique globale d'entraînement constante pour l'envoi du liquide et de l'air ou de l'oxygène aux buses, et la valeur prédéterminée pour la quantité d'eau de service, à laquelle cette dernière est maintenue constante, correspond à la valeur en abscisse (4) à l'intérieur d'une gamme dans laquelle la dérivée première du lieu géométrique des points de contact des courbes (1, 2), représentant les dépendances de la quantité d'air ou d'oxygène pour chaque buse vis-à-vis de la quantité d'eau pour chaque buse pour une alimentation constante en oxygène et pour une puissance mécanique globale d'entraînement constante, dépasse une valeur minimale prédéterminée et prend notamment sa valeur maximale.

FIG. 1

LUFTMENGE / DÜSE

WASSERMENGE / DÜSE

FIG. 2

LUFTMENGE / DÜSE

WASSERMENGE / DÜSE

1